Europäisches Patentamt

(19) European Patent Office

Office européen des brevets

(11) Veröffentlichungsnummer: **0 013 387**
**B1**

# EUROPÄISCHE PATENTSCHRIFT

(12)

(45) Veröffentlichungstag der Patentschrift:
**24.03.82**

(21) Anmeldenummer: **79105249.1**

(22) Anmeldetag: **18.12.79**

(51) Int. Cl.³: **C 04 B 43/00**, C 04 B 31/40

(54) **Agglomerierte Teilchen aus hochdispersen Metalloxiden und Trübungsstoffen, Verfahren zu ihrer Herstellung und ihre Verwendung.**

(30) Priorität: **20.12.78 DE 2854984**

(43) Veröffentlichungstag der Anmeldung:
**23.07.80 Patentblatt 80/15**

(45) Bekanntmachung des Hinweises auf die Patenterteilung:
**24.03.82 Patentblatt 82/12**

(84) Benannte Vertragsstaaten:
**AT BE CH DE FR GB IT NL SE**

(56) Entgegenhaltungen:
**EP-A1-0 002 487**
**DE-A-1 905 673**
**DE-A1-2 712 625**
**DE-A1-2 806 367**
**DE-B-2 036 124**
**US-A-3 055 831**

(73) Patentinhaber: **Consortium für elektrochemische Industrie GmbH, Zielstattstrasse 20,
D-8000 München 70 (DE)**

(72) Erfinder: **Kratel, Günter, Dr., Dipl.-Chem.,
Alpenblickstrasse 10, D-8961 Durach-Bechen (DE)**
Erfinder: **Katzer, Hans, Dr., Dipl.-Chem., Sollner
Strasse 10, D-8000 München 71 (DE)**
Erfinder: **Loskot, Stephan, Dr., Dipl.-Chem.,
Ludwigstrasse 37, D-8960 Kempten (DE)**
Erfinder: **Lang, Wilfried, Säntisstrasse 2, D-8961 Sulzberg
(DE)**
Erfinder: **Weis, Klaus, Ledererstrasse 7,
D-8000 München 2 (DE)**

Agglomerierte Teilchen aus hochdispersen Metalloxiden und Trübungsstoffen, Verfahren zu ihrer Herstellung und ihre Verwendung

Die Erfindung betrifft agglomerierte Teilchen aus hochdispersen Metalloxiden und Trübungsstoffen, das Verfahren zu deren Herstellung sowie die Anwendung dieser Mischungen als Wärmedämmaterial.

Mischungen aus hochdispersen Metalloxiden und anorganischem feinteiligem Material sind bereits beschrieben. So ist aus der DE-B-20 36 124 eine Isolierplatte bekannt, die aus teilchenförmigem Isoliermaterial besteht, das durch inniges Mischen von Silika-Aerogel, einem Trübungsmittel und wahlweise einem faserigen Werkstoff hergestellt ist. Diese Mischungen werden durch intensives Verrühren der einzelnen Mischungskomponenten unter verhältnismässig grossem Energieaufwand hergestellt. Trotzdem gelingt es bei diesen mechanischen Mischverfahren nur unvollständig, die einzelnen Mischungskomponenten ineinander fein zu verteilen. Wärmedämmplatten, die aus diesen Mischungen hergestellt werden, können nur unter Einsatz hoher Pressdrücke zu Platten mit brauchbaren Festigkeitseigenschaften geformt werden. Diese Isolierplatten, die lediglich aus mechanisch vermischten Komponenten bestehen, weisen in der Daueranwendung Mängel in der Haltbarkeit auf.

Aufgabe der Erfindung war es, Mischungen aus flammhydrolysierten hochdispersen Metalloxiden und anorganischen Trübungsstoffen, ggf. in Gegenwart von Bindemitteln, anzugeben, die eine bessere Verteilung der einzelnen Mischungskomponenten ineinander aufweisen und ohne grossen mechanischen Rühraufwand hergestellt werden können.

Zweck der Erfindung ist es, feinverteiltes anorganisches Material bereitzustellen, das zur Herstellung von Wärmedämmplatten mit guten mechanischen Eigenschaften geeignet ist.

Gegenstand der Erfindung sind agglomerierte Teilchen bestehend aus

1. 20-95 Gew.% von durch Flammhydrolyse hergestellten hochdispersen Metalloxiden, vorzugsweise hochdisperse Kieselsäure, bzw. deren Mischungen oder Mischoxide,

2. 5-70 Gew.% anorganische Trübungsmittel, die mindestens ein IR-Absorptionsmaximum im Bereich zwischen 1,5 und 10 µm aufweisen, aus der Gruppe der anorganischen Oxide und Mischoxide, Carbide, Nitride, wobei die Trübungsmittel in die Metalloxide einagglomeriert sind.

Ein weiterer Gegenstand der Erfindung ist ein Verfahren zur Herstellung dieser Teilchen, das dadurch gekennzeichnet ist, dass das anorganische Trübungsmittel kontinuierlich im angestrebten Mischungsverhältnis im ersten Drittel des nach der Flammhydrolyse angeordneten Agglomerationsaggregates dem flammhydrolysierten Metalloxid zugemischt und in dieses einagglomeriert wird. Das Trübungsmittel kann auch bereits im Verbrennungsraum bei der Herstellung flammhydrolysierter Metalloxide zugegeben werden.

Ein weiterer Gegenstand der Erfindung ist die Verwendung von aus diesen Teilchen geformtem Wärmedämmaterial in mechanisch verdichteter Raumform, ggf. in Verbindung mit bis zu 5 Gew.% Bindemitteln.

Überraschenderweise weisen die durch das erfindungsgemässe Verfahren hergestellten agglomerierten Teilchen gegenüber herkömmlichen, unter grossem mechanischem Aufwand hergestellten Mischungen häufig Vorteile hinsichtlich der Festigkeit im geformten Wärmedämmaterial auf. Ausserdem ist festzustellen, dass bei gleichem Anteil von anorganischem Trübungsmittel in der aus durch Flammhydrolyse hergestellten hochdispersen Metalloxidmatrix gegenüber dem bekannten Stand der Technik bessere Wärmedämmeigenschaften resultieren.

Die erfindungsgemässen agglomerierten Teilchen zeichnen sich gegenüber den nach dem bekannten Stand der Technik durch intensives Vermischen der einzelnen Komponenten hergestellten Mischungen dadurch aus, dass sie, obwohl mit geringerem mechanischem Aufwand hergestellt, einen höheren Verteilungsgrad der einzelnen Komponenten ineinander aufweisen. Die Herstellung flammhydrolysierter Metalloxide ist dem Fachmann allgemein bekannt. Es wird dabei üblicherweise so verfahren, dass in eine in einer abgeschlossenen Kammer brennende Zündflamme flüchtige bzw. verdampfbare Metallverbindungen eingebracht werden und in der Flamme zu hochdispersen Metalloxiden umgesetzt werden. Die dabei entstehenden Verbrennungsgase und in äusserst feinteiliger Form anfallende Metalloxide werden dann in einem Agglomerationsaggregat zu Teilchenverbänden agglomeriert und dabei die Raumdichte erhöht. Im Zeitpunkt des Entstehens der feinteiligen Metalloxide, d.h. vor der Agglomeration im Agglomerationsaggregat, weisen die feinteiligen Metalloxide Eigenschaften auf, die bisher unberücksichtigt blieben. Agglomerationsaggregate sind z.B. Zyklone, Rohrbögen bzw. Rohre mit Umlenkeinrichtungen.

Flammhydrolysierte hochdisperse Metalloxide werden in der Technik in grossen Mengen hergestellt. Solche Metalloxide sind beispielsweise Siliciumdioxid, Aluminiumoxid, Titanoxid und machmal auch Zirkonoxid. Die grösste Bedeutung dürfte wohl in diesem Zusammenhang Siliciumdioxid in reiner Form bzw. in Form seiner Mischungen mit anderen genannten Metalloxiden bzw. in Form der Mischoxide aus Siliciumdioxid und der obengenannten Metalloxide erreicht haben.

Als im erfindungsgemässen Zusammenhang einsetzbare anorganische Trübungsmittel sind die folgenden in Betracht zu ziehen, z.B. Ilmenit,

Titandioxid, Siliciumcarbid, Eisen II-Eisen III-Mischoxide, Chromdioxid, Zirkonoxid, Mangandioxid, Eisenoxid.

Diese anorganischen Trübungsmittel weisen im Infrarotbereich ein Absorptionsmaximum zwischen 1,5 und 10 μm auf. Belanglos ist in diesem Zusammenhang, ob die Absorption einzelne Maximas oder auch eine kontinuierliche vollständige Absorption in diesem Bereich aufweist. Für die erfindungsgemässe Verwendung der agglomerierten Teilchen liegt es im Bereich der Erfahrung des Durchschnittsfachmannes, zur Erzielung höherer Festigkeiten allein oder im Gemisch solche Trübungsmittel einzusetzen, die anisotrope geometrische Formen aufweisen, wie z.B. Faser- oder Blättchenstruktur.

Die agglomerierten erfindungsgemässen Teilchen bestehen aus 30 bis 95 Gew.% von durch Flammhydrolyse hergestellten hochdispersen Metalloxiden, vorzugsweise hochdisperse Kieselsäure, bzw. deren Mischungen oder Mischoxide sowie 5 bis 70 Gew.% des anorganischen Trübungsmittels. Das erfindungsgemässe Verfahren zur Herstellung dieser agglomerierten Teilchen besteht darin, dass die anorganischen Trübungsmittel kontinuierlich im angestrebten Mischungsverhältnis unmittelbar an den Herstellungsprozess des flammhydrolysierten Metalloxides anschliessend in dem Bereich zugeführt wird, in dem flammhydrolysierte Metalloxide noch in Form der Primärteilchen vorliegen. Dies kann zweckmässigerweise im ersten Drittel des Agglomerationsaggregates erfolgen, wobei das flammhydrolysierte Metalloxid noch als Primärteilchen mit aktiver Oberfläche vorliegt. Natürlich ist es auch möglich, das Trübungsmittel bereits vor dem Agglomerationsaggregat in den Produktstrom einzubringen, jedoch muss dafür Sorge getragen sein, dass bei der Zugabe oxidationsempfindlicher anorganische Trübungsstoffe die Zugabestelle so gewählt werden muss, dass keine nachteiligen Sekundärreaktionen auftreten können. Üblicherweise wird das Trübungsmittel im ersten Drittel des Agglomerationsaggregates zugeführt. Die Zuführung erfolgte beispielsweise über eine Dosiereinrichtung, wobei das Trübungsmittel ggf. unter Überdruck in das Agglomerationssystem eingestäubt wird bzw. das Trübungsmittel durch einfache statische oder mechanisch bewegte Rührvorrichtungen im Agglomerationsaggregat mit den Metalloxidprimärteilchen vermischt wird. Am Ende der Agglomerationsstrecke ist nach der erfindungsgemässen Verfahrensweise ein Produkt zu entnehmen, das sich hinsichtlich des Verteilungsgrades der gemischten Komponenten deutlich von Produkten unterscheidet, die lediglich durch mechanische Mischung von flammhydrolysierten Metalloxidfertigprodukten mit Trübungsmitteln hergestellt wurden.

Die erfindungsgemässen Teilchen werden insbesondere als Wärmedämmaterial eingesetzt. Dabei verfährt man in der Weise, dass das aus dem Agglomerationsaggregat entnommene coagglomerierte entsäuerte und getrocknete Produkt in üblicher Weise, ggf. unter Vakuum, verdichtet wird und anschliessend unter Anwendung von mechanischem Druck zu Formkörpern geformt wird. Solche Formkörper sind beispielsweise Platten, Würfel, Quader oder Kugeln.

Die Pressdrücke liegen im allgemeinen zwischen 5 und 15 bar, wobei höhere Pressdrücke nicht von vorneherein ausgeschlossen werden sollen. Auch die Zugabe von Bindemitteln, sei es anorganischer oder organischer Form, kann manchmal von Vorteil sein. Solche Bindemittel sind beispielsweise anorganische Oxide, die in Mengen bis 5 Gew.% zugesetzt werden können und die Metalloxide sowie die Trübungsmittel durch Ausbildung von beispielsweise glasartigen Strukturen miteinander verkleben können. Ebenso ist daran zu denken, dass organische Bindemittel zur Verbesserung der Grünstruktur der geformten Raumkörper zugemischt werden.

Beispiel 1

In einer Versuchsanlage mit einer stündlichen Leistung von 10 Kg $SiO_2$ wurde hochdisperse Kieselsäure nach bekanntem Verfahren pyrolytisch aus $SiCl_4$ hergestellt. Die spezifische Oberfläche nach BET wurde auf 250 m²/g eingestellt. Über eine Dosierschnecke wurde Ilmenitpulver IL F, BET = 8,4 m²/g, Schüttdichte = 1133 g/1, mit einer solchen Dosiergeschwindigkeit in den Primärteilchenstrom vor der Agglomerationsstrecke eingeführt, dass das agglomerierte Produkt einen Ilmenitgehalt von 15% hatte. Im Abgasstrom herrschte hierbei eine Temperatur von ca. 350°C. Nach Vervollständigung der Coagglomeration wurde das Produkt im Zyklon abgeschieden. Der Feststoff wurde anschliessend im Fliessbett bei 600° C entsäuert.

Die Bestimmung der Ilmenitkonzentration erfolgte gravimetrisch durch Abrauchen der Proben mit Flussäure unter Berücksichtigung des Gewichtsverlustes von reinem Ilmenit bei dieser Behandlung.

Zur Herstellung von Pressplatten wurden 50 g des Coagglomerats in einen Zylinder (10,7 cm Durchmesser, Vakuumanschluss an der Bodenplatte) gegeben. Unter Evakuieren wurde das Coagglomerat auf eine Dicke von 2 cm zusammengepresst. Der Pressdruck betrug 150 Newton/cm².

Die Wärmeleitfähigkeit wurde nach dem Heissdraht-Verfahren (Vornorm DIN 51 046, Teil 1) bestimmt.

Die Druckfestigkeit der Pressplatten wurde nach DIN 53 456 bestimmt.

Ergebnis:
Wärmeleitzahl (λ) = 0,028 (W·m⁻¹·K⁻¹)
Kugeldruckhärte (H) = 153 (Newton/cm²)

Beispiel 2

Die im Beispiel 1 angegebene Versuchsdurchführung wurde wiederholt, mit der Abänderung, dass das Ilmenit so zudosiert wurde, dass das coagglomerierte Produkt 45% Ilmenit enthielt.
Ergebnis:
Wärmeleitzahl (λ) = 0,021 (W·m⁻¹·K⁻¹)

Kugeldruckhärte (H) = 125 (Newton/cm²)

**Beispiel 3**

Die im Beispiel 1 angegebene Versuchsdurchführung wurde wiederholt, mit den Abänderungen, dass anstelle von Ilmenit Titandioxid, Bayer Titan A, BET = 8,1 m²/g, SD = 584 g/l, eingesetzt wurde und dass das $TiO_2$ so zudosiert wurde, dass das coagglomerierte Produkt 15% $TiO_2$ enthielt.

Ergebnis:
Wärmeleitzahl ($\lambda$) = 0,024 (W·m⁻¹·K⁻¹)
Kugeldruckhärte (H) = 95 (Newton/cm²)

**Beispiel 4**

Die im Beispiel 1 angegebene Versuchsdurchführung wurde wiederholt, mit den Abänderungen, dass anstelle von Ilmenit Bornitrid, Elektroschmelzwerk Kempten, BN-S, BET = 15,8 m²/g, SD = 420 g/l, 0,17 Gew.% $B_2O_3$ eingesetzt wurde und dass das Bornitrid so zudosiert wurde, dass das coagglomerierte Produkt 14% BN enthielt.

Ergebnis:
Wärmeleitzahl ($\lambda$) = 0,028 (W·m⁻¹·K⁻¹)
Kugeldruckhärte (H) = 65 (Newton/cm²)

**Vergleichsbeispiel I**

15 g Ilmenitpulver IL F, BET = 8,4 m²/g, Schüttdichte = 1133 g/l, wurden in einer Porzellanschale mit 10 g hochdisperser Kieselsäure, HDK T 30, Wacker-Chemie GmbH, BET = 300 m²/g, SD = 5070 g/l, durch Umrühren und Verreiben gemischt. Diese Mischung wurde durch ein Metallsieb mit einer Maschenweite von 1,5 mm auf 75 g HDK gegeben und umgerührt. Dieses Gemisch wurde dann noch zweimal unter ständigem Umrühren durch das Metallsieb gemischt. Es entstand eine optisch homogene Mischung. Zur Herstellung von Pressplatten wurden 50 g der 15% Ilmenit enthaltenden Mischung in einen Metallzylinder (ø 10,7 cm, Vakuumanschluss an der Bodenplatte) gegeben. Unter Evakuieren wurde das Pulver auf eine Dicke von 2 cm zusammengepresst. Der Pressdruck betrug 93 Newton/cm². Die Wärmeleitfähigkeit dieser Platte wurde nach dem Heissdrahtverfahren (Vornorm DIN 51046, Teil 1) bestimmt. Die Druckfestigkeit der Pressplatte wurde nach DIN 53456 bestimmt.

Ergebnis:
Wärmeleitzahl ($\lambda$) = 0,032 (W·m⁻¹·K⁻¹)
Kugeldruckhärte (H) = 110 (Newton/cm²)

**Vergleichsbeispiel II**

Die im Vergleichsbeispiel I angebene Versuchsdurchführung wurde wiederholt, mit der Abänderung, dass das Gemisch 45% Ilmenit enthielt.

Ergebnis:
Wärmeleitzahl ($\lambda$) = 0,025 (W·m⁻¹·K⁻¹)
Kugeldruckhärte (H) = 50 (Newton/cm²)

**Vergleichsbeispiel III**

Die im Vergleichsbeispiel I angegebene Versuchsdurchführung wurde wiederholt, mit den Abänderungen, dass anstelle von Ilmenit Titandioxid, Bayer Titan A, BET = 8,1 m²/g, SD = 584 g/l, eingesetzt wurde und dass das Gemisch 15% $TiO_2$ enthielt.

Ergebnis:
Wärmeleitzahl ($\lambda$) = 0,035 (W·m⁻¹·K⁻¹)
Kugeldruckhärte (H) = 125 (Newton/cm²)

**Vergleichsbeispiel IV**

Die im Vergleichsbeispiel I angegebene Versuchsdurchführung wurde wiederholt, mit den Abänderungen, dass anstatt Ilmenit Bornitrid, Elektroschmelzwerk Kempten, BN-S, BET = 15,8 m²/g, SD = 420 g/l, 0,17 Gew.% $B_2O_3$, eingesetzt wurde und dass das Gemisch 14% BN enthielt.

Ergebnis:
Wärmeleitzahl ($\lambda$) = 0,037 (W·m⁻¹·K⁻¹)
Kugeldruckhärte (H) = 122 (Newton/cm²)

**Patentansprüche**

1. Agglomerierte Teilchen, bestehend aus
(1.) 30–95 Gew.% von durch Flammhydrolyse hergestellten hochdispersen Metalloxiden, vorzugsweise hochdisperse Kieselsäure bzw. deren Mischungen oder Mischoxide,
(2.) 5–70 Gew.% anorganische Trübungsmittel, die mindestens ein IR-Adsorptionsmaximum im Bereich zwischen 1,5 und 10 μm aufweisen, aus der Gruppe der anorganischen Oxide und Mischoxide, Carbide, Nitride, wobei die Trübungsmittel in die Metalloxide einagglomeriert sind.

2. Verfahren zur Herstellung von Teilchen nach Anspruch 1, dadurch gekennzeichnet, dass das anorganische Trübungsmittel kontinuierlich im angestrebten Mischungsverhältnis im ersten Drittel des nach der Flammhydrolyse angeordneten Agglomerationsaggregates dem flammhydrolysierten Metalloxid zugemischt und in dieses einagglomeriert wird.

3. Verfahren zur Herstellung von Teilchen nach Anspruch 1, dadurch gekennzeichnet, dass das anorganische Trübungsmittel kontinuierlich im angestrebten Mischungsverhältnis der Verbrennungszone bei der Herstellung der flammhydrolysierten Metalloxide zugegeben wird.

4. Verwendung der Teilchen nach Anspruch 1 in Wärmedämmaterial in mechanisch verdichteter Raumform, ggf. in Verbindung mit bis zu 5 Gew.% Bindemitteln.

**Claims**

1. Agglomerated particles consisting of
(1.) 30–95% by weight of highly dispersed metal oxides produced by flame hydrolysis, preferably highly dispersed silica, or mixtures or mixed oxides thereof respectively,
(2.) 5–70% by weight of inorganic opacifiers which have at least one infrared absorption maximum in the range between 1.5 and 10 μm, selected from the group consisting of inorganic oxides and mixed oxides, carbides and nitrides, said opacifiers being agglomerated in the metal oxides.

2. Process for the manufacture of particles according to claim 1, characterized in that the inorganic opacifier is continuously mixed, in the desired mixing ratio, with the flame-hydrolyzed metal oxide in the first one-third of the agglomeration plant which is arranged subsequently to the flame hydrolysis, and is agglomerated therein.

3. Process for the manufacture of particles according to claim 1, characterized in that the inorganic opacifier is continuously added to the combustion zone, in the desired mixing ratio, during the manufacture of the flame-hydrolyzed metal oxide.

4. Use of the particles according to claim 1 in heat-insulating material in mechanically compressed form, optionally in combination with up to 5% by weight of binders.

## Revendications

1. Particules agglomérées, caractérisées en ce qu'elles consistent en:

(1.) 30 à 95% en poids d'oxydes métalliques fortement dispersés, produits par hydrolyse à la flamme, de préférence de l'acide silicique fortement dispersé ou ses mélanges ou oxydes mixtes;

(2.) 5 à 70% en poids d'opacifiants minéraux, présentant au moins un maximum d'absorption de l'infrarouge entre 1,5 et 10 micromètres, choisis parmi les oxydes minéraux et les oxydes mixtes, les carbures et les nitrures, les opacifiants étant incorporés par agglomération dans les oxydes métalliques.

2. Procédé pour préparer des particules selon la revendication 1, caractérisé en ce qu'on incorpore continuellement, selon le rapport de mélange voulu, l'opacifiant minéral à l'oxyde métallique hydrolysé à la flamme dans le premier tiers de l'appareillage d'agglomération disposé après l'hydrolyse à la flamme, et en ce qu'on l'y agglomère.

3. Procédé pour préparer des particules selon la revendication 1, caractérisé en ce qu'on introduit continuellement, selon le rapport de mélange voulu, l'opacifiant minéral dans la zone de combustion lors de la préparation des oxydes métalliques hydrolysés à la flamme.

4. Utilisation des particules selon le revendication 1 dans un isolant thermique sous forme mécaniquement compactée, éventuellement en combinaison avec jusqu'à 5% en poids de liants.